# EUROPÄISCHE PATENTSCHRIFT

(11) **EP 3 426 366 B1**
(45) Veröffentlichungstag und Bekanntmachung des Hinweises auf die Patenterteilung: **26.02.2020**
(21) Anmeldenummer: 17709686.4
(22) Anmeldetag: 09.03.2017
(51) Int. Cl.: A63G 31/16, A63G 7/00, G06F 1/16, G06F 3/147, G06F 3/01

(54) **POSITIONSBESTIMMUNG UND AUSRICHTUNG EINES VIRTUAL REALITY HEADSETS UND FAHRGESCHÄFT MIT EINEM VIRTUAL REALITY HEADSET**
DETERMINING A POSITION, ALIGNING A VIRTUAL REALITY HEADSET, AND AN AMUSEMENT RIDE WITH A VIRTUAL REALITY HEADSET
DÉTERMINATION DE POSITION ET ORIENTATION D'UN CASQUE DE RÉALITÉ VIRTUELLE, ET MANÈGE D'ATTRACTION DOTÉ D'UN CASQUE DE RÉALITÉ VIRTUELLE

(30) Priorität: 09.03.2016 DE 102016104337
(43) Veröffentlichungstag der Anmeldung: 16.01.2019
(73) Patentinhaber: VR Coaster GmbH & Co. KG, 67663 Kaiserslautern (DE)
(72) Erfinder: GORDT, Dennis, 79350 Sexau (DE); HEYSE, Michael, 67663 Kaiserslautern (DE)
(74) Vertreter: Westphal, Mussgnug & Partner Patentanwälte mbB
(86) Internationale Anmeldenummer: PCT/EP2017/055571
(87) Internationale Veröffentlichungsnummer: WO 2017/153532

(56) Entgegenhaltungen:
- EP-A1- 0 691 146
- WO-A1-98/31444
- DE-A1-102014 111 386
- JP-A- 2001 062 154
- JP-A- 2012 226 666
- US-A1- 2016 048 203
- US-B1- 6 179 619

## Beschreibung

Die Erfindung betrifft ein Verfahren zur Positionsbestimmung wenigstens eines Virtual Reality Headsets in Fahrgeschäften gemäß dem Oberbegriff des Patentanspruchs 1, ein Verfahren zur Ausrichtung wenigstens eines Virtual Reality Headsets gemäß dem Oberbegriff des Patentanspruchs 2 und ein Fahrgeschäft, mit welchem ein erfindungsgemäßes Verfahren ausführbar ist gemäß Patentanspruch 14.

Hier und im Folgenden wird unter virtueller Realität die Darstellung und gleichzeitige Wahrnehmung der Realität und ihrer physikalischen Eigenschaften in einer in Echtzeit computergenerierten, interaktiven virtuellen Umgebung bezeichnet. Eine Anforderung, die beim Erstellen einer virtuellen Realität gestellt werden kann, ist beispielsweise das Ausmaß, um das sich die Wahrnehmung der eigenen Person in der wirklichen Realität vermindert und die Identifikation mit einer Person in der virtuellen Realität vergrößert. Dieser Effekt ist als Immersion bekannt

Um ein Gefühl der Immersion zu erzeugen, werden zur Darstellung virtueller Realitäten spezielle Ausgabegeräte benötigt, beispielsweise Virtual Reality Headsets oder Head-Mounted Displays, die am Kopf eines Fahrgastes getragen werden.

Die Hauptkomponenten eines derartigen Ausgabegeräts sind eine Displayeinheit und eine Optik. Die Displayeinheit liefert das Bild aus einer angeschlossenen Datenquelle. Die Optik leitet das Bild weiter und projiziert es vor das Auge. Die Displayeinheit und die Optik können in eine Brille oder in einen Datenhelm oder dergleichen integriert sein.

Es sind Fahrgeschäfte bekannt, bei denen der Fahrgast während einer Fahrt ein Virtual Reality Headset trägt, auf dem eine mit der Fahrt synchronisierte virtuelle Realität der Fahrt angezeigt wird.

Beispielsweise beschreibt die JP 2001062154 A einen von einem Fahrgast einer Achterbahn während der Fahrt zu tragenden Helm mit einer Brille und einem Kopfhörer als ein Head Mounted Display zur Darstellung von Bild- und Audioinformationen. In diese Brille wird eine virtuelle Realität eingeblendet und die zugehörigen Audioinformationen über den Kopfhörer erzeugt.

EP 2 138 213 B1 offenbart ein Verfahren, bei dem eine virtuelle Realität einer Fahrt mit einer Achterbahn auf einer von einem Fahrgast aufzusetzenden Brille bzw. einem Head Mounted Display abgebildet wird. Dabei nimmt ein Aufnahmegerät ein Bild von der vom Fahrzeug aus wahrnehmbaren optischen Realität auf. Eine Einrichtung erzeugt visuelle Eindrücke, die die Realitätswahrnehmung verändern. Das Fahrgeschäft weist ferner ein Element auf, das aus den von der Einrichtung erzeugten visuellen Eindrücken und dem von dem Aufnahmegerät aufgenommenen Bild ein Gesamtbild erzeugt und eingespielte oder eingemischte visuelle Zusatzeindrücke abbildet.

Bei einer Fahrt durch eine virtuelle Realität ist es entscheidend, dass das Virtual Reality Headset, das die virtuelle Realität darstellt, derart positioniert und ausgerichtet ist, dass die Bewegung des Fahrgastes in der virtuellen Realität so gut es geht mit der realen Bewegung in der wirklichen Realität synchronisiert ist.

Bei den bekannten Verfahren, z. B. bei einem Zug einer Achterbahn, wird die Position des vom Fahrgast getragenen Virtual Reality Headsets durch die vom Fahrgast eingenommene Sitzreihe bestimmt. Jedes Virtual Reality Headset ist dabei einer bestimmten Sitzreihe zugeordnet. Ein derartiges Verfahren ist beispielsweise in der US 6,179,619 B1 offenbart. Das Virtual Reality Headset kann dabei also nur für eine vorgegebene Sitzreihe verwendet werden. Diese Positionsbestimmung erfordert einen erhöhten Koordinationsaufwand für den Betreiber des Fahrgeschäftes. Es muss darauf geachtet werden, dass die Virtual Reality Headsets in jeweils der richtigen Sitzreihe montiert und angeschlossen sind.

Außerdem ist es bekannt, mittels Radiofrequenzen oder Near Field Communication Chips auf oder neben dem betreffenden Fahrzeug des Fahrgeschäftes beim Einsteigen die Nummer der Sitzreihe an das Virtual Reality Headset zu übermitteln. Allerdings erfordert dieses Verfahren zur Positionsbestimmung des Virtual Reality Headsets einen zusätzlichen Prozessschritt, der auch vergessen werden kann.

In der wirklichen Realität können gewöhnlich eine fest vorgegebene Richtung und damit eine Ausrichtung mittels eines Kompasses bestimmt werden. Zum Beispiel kann mit einem Magnetkompass die magnetische Nordrichtung bestimmt werden. Da in einer typischen Achterbahnumgebung auf Grund der zahlreichen Stahlelemente und Elektromotoren kein Magnetkompass zur Ausrichtung der virtuellen Realität eingesetzt werden kann, muss bislang die virtuelle Realität manuell ausgerichtet werden, etwa, in dem der Fahrgast das Virtual Reality Headset erst beim Sitzen im Fahrzeug aufsetzt und auf Anweisung des Betreibers exakt geradeaus blickt. In diesem Fall fällt eine Hochachse des Fahrgastes mit einer Lotrichtung zusammen, sodass der Betreiber die Ausrichtung der virtuellen Realität in Übereinstimmung mit der Ausrichtung der wirklichen Realität bringen kann. Die Hochachse ist die vertikale Achse in dem mit dem Fahrgast fest verbundenen Bezugssystem. Die Lotrichtung ist im Bezugssystem der Erde definiert und weist zum Erdmittelpunkt. Alternativ kann auch per Knopfdruck während des Geradausblickens die virtuelle Realität ausgerichtet werden. Dabei kann aber schon eine geringe Abweichung von der Geradeausrichtung zu einer Fehlausrichtung der virtuellen Realität führen, was bei Fahrt durch die virtuelle Realität bei dem Fahrgast Schwindelgefühle und Übelkeit auslösen kann.

Aus DE 10 2014 111 386 A1 ist ein Verfahren zum Betreiben eines Fahrgeschäfts mit wenigstens einem sich entlang einer Fahrstrecke eines Fahrgeschäfts bewegenden Fahrzeug vorbekannt, wobei das wenigstens eine Fahrzeug wenigstens einen Fahrgast aufnimmt,dem das Virtual Reality Headset während einer Fahrt mit dem Fahrzeug aufgesetzt ist, wobei bei einem Betrieb des Fahrgeschäfts in der wirklichen Realität eine der Fahrt mit dem Fahrzeug entsprechende virtuelle Realität erzeugt und auf dem Virtual Reality Headset dargestellt wird und wobei das Fahrgeschäft wenigstens einen Positionsgeber aufweist, der auf einer optischen, induktiven oder mechanischen Basis die aktuelle Position des Fahrzeugs auf dem Schienensystem der Achterbahn bestimmt. Das Virtual Reality Headset ist ein mobiles Virtual Reality Headset und umfasst eine drahtlose Kommunikationsschnittstelle, über die eine Datenverbindung zwischen dem Virtual Reality Headset und einer Datenverarbeitungsvorrichtung des Fahrgeschäfts erfolgt.

US 2016 0 048 203 A1 lehrt ein Verfahren zur Positionsbestimmung wenigstens eines Virtual Reality Headsets in wenigstens einem sich entlang einer Fahrstrecke eines Fahrgeschäfts bewegenden Fahrzeug, das wenigstens einen Fahrgast aufnimmt, dem das Virtual Reality Headset während einer Fahrt mit dem Fahrzeug aufgesetzt ist, wobei bei einem Betrieb des Fahrgeschäfts in der wirklichen Realität eine der Fahrt mit dem Fahrzeug entsprechende virtuelle Realität erzeugt und auf dem Virtual Reality Headset dargestellt wird. Das Fahrgeschäft umfasst darüber hinaus ein Monitoringsystem, wobei das Monitoringsystem ausgebildet ist, die Position und Orientierung des Virtual Reality Headsets zu bestimmen. Das Monitoringsystem umfasst hierzu beispielsweise eine oder mehrere Kameras.

Die Aufgabe der Erfindung besteht daher darin, ein Verfahren zur Positionsbestimmung und Ausrichtung eines Virtual Reality Headsets bereitzustellen, durch das die beschriebenen Nachteile überwunden werden. Zusätzlich ist es eine Aufgabe der vorliegenden Erfindung, ein Fahrgeschäft, insbesondere Achterbahn, mit einem oder mehreren Virtual Reality Headsets bereitzustellen, dessen Positionsbestimmung und Ausrichtung ohne die beschriebenen Nachteile erfolgt. Insbesondere soll bei den erfindungsgemäßen Verfahren und dem zugehörigen Fahrgeschäft eine hohe Flexibilität sowie beliebige Einsatzmöglichkeiten hinsichtlich der verwendeten Virtual Reality Headsets möglich sein.

Die Aufgabe der Erfindung wird gelöst durch ein Verfahren mit den Merkmalen des Patentanspruchs 1, durch ein Verfahren mit den Merkmalen des Patentanspruchs 2 und durch ein Fahrgeschäft gemäß Patentanspruch 14.

Vorteilhafte Ausgestaltungen und Weiterbildungen der Erfindung sind in den Unteransprüchen angegeben.

Bei dem erfindungsgemäßen Verfahren zur Positionsbestimmung wenigstens eines Virtual Reality Headsets in wenigstens einem entlang einer Fahrstrecke eines Fahrgeschäftes sich bewegenden Fahrzeuges, das wenigstens einen Fahrgast aufnimmt, ist das Virtual Reality Headset während einer Fahrt mit dem Fahrgeschäft dem Fahrgast aufgesetzt. Bei einem Betrieb des Fahrgeschäftes in einer wirklichen Realität wird eine der Fahrt mit dem Fahrzeug entsprechende virtuelle Realität erzeugt und auf dem Virtual Reality Headset dargestellt. Das Fahrgeschäft weist wenigstens einen Positionsgeber auf, von dem wenigstens ein Positionssignal ausgeht.

Erfindungswesentlich ist, dass das Virtual Reality Headset ein mobiles Virtual Reality Headset ist und dass das Virtual Reality Headset wenigstens einen Empfänger aufweist, der das Positionssignal des Positionsgebers zur Positionsbestimmung des Virtual Reality Headsets in dem Fahrzeug relativ zu dem Positionsgeber auswertet. Außerdem weist das Virtual Reality Headset erfindungsgemäß eine lösbare und/oder drahtlose Kommunikationsschnittstelle auf, über die eine Datenverbindung zwischen dem Virtual Reality Headset und einer Datenverarbeitungsvorrichtung des Fahrgeschäfts erfolgt.

Hier und im Folgenden bezeichnet der Begriff Datenverbindung sowohl eine zweiseitige Datenübertragung, d.h. einen Datenübertrag von der Datenverarbeitungsvorrichtung zu dem Virtual Reality Headset und einen Datenübertag von dem Virtual Reality Headset zu der Datenverarbeitungsvorrichtung, als auch eine einseitige Datenübertragung, beispielsweise lediglich von der Datenverarbeitungsvorrichtung zu dem Virtual Reality Headset.

In dem Fall eines Achterbahnzuges mit auf einzelne als Fahrzeug dienende Wagons verteilte Sitzreihen kann ein erster Fahrgast in einer bezüglich einer Fahrtrichtung vorderen Sitzreihe Platz nehmen, ein zweiter Fahrgast in einer hinteren Sitzreihe. Der erste und der zweite Fahrgast empfangen das Positionssignal aufgrund der unterschiedlichen Sitzreihe als unterschiedliche erste und zweite Empfangssignale. Beispielsweise kann die Amplitude, Frequenz oder Stärke des ersten Empfangssignals verschieden sein von der des zweiten Empfangssignals. Aus einem Vergleich der Amplituden, Frequenzen, Stärken oder sonstigen Signalgrößen der jeweiligen Empfangssignale mit denen des ursprünglichen Positionssignals kann dann das Virtual Reality Headset automatisch die Sitzreihe bestimmen, der es zugeordnet ist. Damit erfolgt die Positionsbestimmung des Virtual Reality Headsets in dem Fahrgeschäft automatisch.

Der Betreiber eines Fahrgeschäftes, beispielsweise einer Achterbahn, kann mit einem Virtual Reality Headset, das seine Position automatisch, also selbst bestimmen kann, vorteilhafterweise Rechenzeit für die Positionsbestimmung einsparen. Im Unterschied zu den bekannten Verfahren, in denen jedes Virtual Reality Headset seine Positionssignale an eine Recheneinheit des Fahrgeschäftes übertragt, in der für jedes einzelne Virtual Reality Headset dessen Position erst berechnet werden muss, wird mit dem erfindungsgemäßen Virtual Reality Headset die bereits im Ergebnis fertig berechnete Position über eine lösbare oder drahtlose Kommunikationsschnittstelle an eine Datenverarbeitungsvorrichtung des Fahrgeschäftes übertragen. Dadurch kann Rechenzeit für die Datenverarbeitungsvorrichtung eingespart werden.

Für den Fall, dass die virtuelle Realität mittels einer Anwendungssoftware, insbesondere einer mobilen App, in dem Virtual Reality Headset erzeugt wird, kann die Datenverarbeitungsvorrichtung über die Kommunikationsschnittstelle dem Virtual Reality Headset ein Start- und/oder Stoppsignal der Fahrt mit dem Fahrzeug übertragen. Damit startet und/oder endet die mobile App und somit die Fahrt in der virtuellen Realität synchron mit dem Start und/oder Stopp der Fahrt mit dem Fahrzeug in der wirklichen Realität.

Für den Fahrgast bringt das erfindungsgemäße mobile Virtual Reality Headset ebenfalls Vorteile mit sich. So kann der Fahrgast das mobile Virtual Reality Headset, das nicht fest in einem Fahrzeug angeordnet ist, auch außerhalb des Fahrzeuges aufsetzen und nutzen, zum Beispiel im Bahnhof einer Achterbahn, oder auch außerhalb des Fahrgeschäftes.

Das erfindungsgemäße Verfahren zur Ausrichtung wenigstens eines Virtual Reality Headsets in wenigstens einem entlang einer Fahrstrecke eines Fahrgeschäftes sich bewegenden Fahrzeugs, das wenigstens einen Fahrgast aufnimmt, dem das Virtual Reality Headset während einer Fahrt mit dem Fahrzeug aufgesetzt ist, wobei bei einem Betrieb des Fahrgeschäftes in einer wirklichen Realität eine der Fahrt mit dem Fahrzeug entsprechende virtuelle Realität erzeugt und auf dem Virtual Reality Headset dargestellt wird" wobei das Fahrgeschäft wenigstens einen Ausrichtungsgeber aufweist, von dem wenigstens ein Ausrichtungssignal ausgeht, zeichnet sich dadurch aus, dass das Virtual Reality Headset ein mobiles Virtual Reality Headset ist, das Virtual Reality Headset wenigstens eine Apparatur aufweist, die das Ausrichtungssignal des Ausrichtungsgebers zur Ausrichtungsbestimmung des Virtual Reality Headsets in der virtuellen Realität relativ zu dem Ausrichtungsgeber auswertet, und dass das Virtual Reality Headset eine lösbare und/oder drahtlose Kommunikationsschnittstelle aufweist, über die eine Datenverbindung zwischen dem Virtual Reality Headset und einer Datenverarbeitungsvorrichtung des Fahrgeschäfts erfolgt.

Als Ausrichtungssignal können beispielsweise Reflektionen eines beliebigen Bildes, im einfachsten Fall eines Striches oder eines Strichcodes, dienen, das an dem Fahrgeschäft angeordnet ist und damit gleichzeitig auch der Ausrichtungsgeber ist. Abhängig von der Hochachse, die zum Beispiel je nach einer eingenommenen Kopfneigung des Fahrgastes in eine unterschiedliche Richtung relativ zu der Lotrichtung zeigt, wird das Bild von der Apparatur des Virtual Reality Headsets aus einer unterschiedlichen Perspektive wahrgenommen. Anhand der Perspektive, unter der das Ausrichtungssignal von der Apparatur des Virtual Reality Headsets wahrgenommen wird, kann dann automatisch die Ausrichtung der Hochachse des Virtual Reality Headsets relativ zu einer Lotrichtung bestimmt werden. Dadurch erkennt das Virtual Reality Headset automatisch, in welcher Richtung der reale Nordpol im Vergleich zu einem virtuellen Nordpol liegt, ohne dass zu einer solchen Ausrichtung der Fahrgast exakt geradeausblicken muss.

Der Betreiber eines Fahrgeschäftes, beispielsweise einer Achterbahn, kann mit einem Virtual Reality Headset, das seine Ausrichtung selbst bestimmen kann, vorteilhafterweise Rechenzeit für die Ausrichtungsbestimmung einsparen. Im Unterschied zu den bekannten Verfahren, in denen jedes Virtual Reality Headset seine Ausrichtungssignale an eine Recheneinheit des Fahrgeschäftes übertragt, in der für jedes einzelne Virtual Reality Headset dessen Ausrichtung erst berechnet werden muss, wird mit dem erfindungsgemäßen Virtual Reality Headset die bereits im Ergebnis fertig berechnete Ausrichtung über eine lösbare oder drahtlose Kommunikationsschnittstelle an eine Datenverarbeitungsvorrichtung des Fahrgeschäftes übertragen.

Dadurch kann Rechenzeit für die Datenverarbeitungsvorrichtung eingespart werden.

Für den Fahrgast bringt das erfindungsgemäße mobile Virtual Reality Headset ebenfalls Vorteile mit sich. So kann der Fahrgast das mobile Virtual Reality Headset, das nicht fest in einem Fahrzeug angeordnet ist, auch außerhalb des Fahrzeuges aufsetzen und nutzen, zum Beispiel im Bahnhof einer Achterbahn, oder auch außerhalb des Fahrgeschäftes.

Vorzugsweise wird das Verfahren zur Positionsbestimmung mit dem Verfahren zur Ausrichtung des Virtual Reality Headsets kombiniert. Damit kann das Virtual Reality Headset gleichzeitig erkennen, wo es sich im Fahrgeschäft befindet und wie es zur wirklichen Realität ausgerichtet ist.

Besonders bevorzugt wird ein Geber, der ein Positionsgeber und zugleich ein Ausrichtungsgeber ist. Damit kann mit einem Geber die Position und die Ausrichtung bestimmt werden. Zum Beispiel kann jeder Sitzreihe eines Fahrzeug ein Strichcode mit einer unterschiedlichen Anzahl, Verteilung und/oder Form von Strichen zugeordnet sein, Mittels der Anzahl, Verteilung und/oder Form von Strichen lässt sich eine Sitzreihe codieren. Aus dem jeweiligen Strichcode kann dann auf die Position in einer bestimmten Sitzreihe zurückgeschlossen werden. Je nach eingenommener Perspektive des jeweiligen Strichcodes ist dann auch die Ausrichtung des Virtual Reality Headsets bestimmt.

Vorteilhafterweise weist das Fahrgeschäft wenigstens drei, vorzugsweise wenigstens acht Positionsgeber auf. Mit drei Positionsgebern kann die Position des Virtual Reality Headsets in dem Fahrgeschäft bestimmt werden, z.B. über Triangulation oder Trilateration. Die drei Positionsgeber können auch in vorgegebenen Zeitintervallen ihre aktuelle Position und die genaue Uhrzeit aussenden. Aus den jeweiligen Empfangssignalen kann der Empfänger des Virtual Reality Headsets seine eigene Position berechnen. Dieses Beispiel ist analog zu dem Satellitennavigations-Verfahren GPS. Zusätzlich können aus dem Positionssignal auch Laufzeiten gemessen werden, anhand denen eine Geschwindigkeit des Virtual Reality Headsets bestimmt werden kann.

Es liegt auch im Rahmen der Erfindung, dass die Geschwindigkeit der Fahrzeuge gemessen wird, beispielsweise mit am Fahrzeug montierten Geschwindigkeitssensoren. Über die Kommunikationsschnittstelle wird die gemessene Geschwindigkeit dem Virtual Reality Headset übertragen. So kann die Geschwindigkeit der Fahrt in der virtuellen Realität mit der Geschwindigkeit in der wirklichen Realität synchronisiert werden.

Der Vorteil des Einsatzes von mehreren Positionsgebern besteht darin, dass ein redundantes System realisiert werden kann. Die überschüssigen Positionsgeber können als Ersatz für einen ausgefallenen Positionsgeber dienen.

In einer bevorzugten Ausgestaltung der Erfindung sind die Positionssignale Bluetooth, WLAN, optische, vorzugsweise infrarote, Quick-Response-Codes oder Strichcodes, magnetische, eine Kombination der voranstehend genannten Signale oder sonstige Funksignale. Insbesondere bei der Verwendung von Bluetooth-Sendesignalen kann die bekannte Bluetooth Low Energy Technologie verwendet werden, die extrem stromsparend arbeitet. Dabei werden im Raum als Positionsgeber dienende kleine Sender, sogenannte Bluetooth-Beacons, platziert, die in festen Zeitintervallen Positionssignale senden. Kommt der Empfänger eines Virtual Reality Headsets in die Reichweite eines Bluetooth-Beacons, kann die Signalstärke des empfangenen Signals gemessen werden. Bei mindestens drei Bluetooth-Beacons in Reichweite des Empfängers lässt sich z. B. durch Trilateration die Position des Empfängers im zweidimensionalen Raum errechnen. Zur Ermittlung eines Standortes in einem dreidimensionalen Raum sind vier Bluetooth-Beacons in Reichweite erforderlich.

In einer weiteren bevorzugten Ausgestaltung der Erfindung sind die Ausrichtungssignale optische, vorzugsweise infrarote, Quick-Response-Codes oder Strichcodes. Durch die perspektivische Wahrnehmung beispielsweise eines Quick-Response-Codes kann vorteilhaft einfach erkannt werden, in welcher Richtung das Virtual Reality Headset ausgerichtet ist.

In einer vorteilhaften Ausgestaltung der Erfindung sind der Positionsgeber und/oder der Ausrichtungsgeber an einer stationären Stelle des Fahrgeschäftes und/oder an dem Fahrzeug angeordnet. Beispielsweise können bei einer Achterbahn der Positionsgeber und der Ausrichtungsgeber an dem Bahnhof der Achterbahn angeordnet sein.

Insbesondere ist wenigstens eine Kamera in dem Virtual Reality Headsets integriert. Die Kamera kann als Apparatur zum Erfassen des Ausrichtungssignals dienen. Mit einer Kamera können eine Sitzplatzerkennung und eine Ausrichtung des Virtual Reality Headsets relativ einfach bestimmt werden. Hierzu reicht es aus, Quick-Response-Codes, Strichcodes oder ein anderes optisches Signal in einem Bahnhof oder in einem Fahrzeug einer Achterbahn anzubringen, das von der Kamera des Virtual Reality Headsets erfasst wird. Aus Position, Perspektive, Codeinhalt oder auch Signalhelligkeit kann dann die Position und die Ausrichtung des benutzten Virtual Reality Headsets ermittelt werden. Als Kamera kann beispielsweise die in einem Smartphone integrierte Kamera dienen, wobei das Smartphone in das Virtual Reality Headset eingesetzt wird.

Gemäß einer Weiterbildung der Erfindung ist ein mobiles Endgerät, vorzugsweise ein Mobilfunkgerät oder ein Mobiltelefon, insbesondere ein Smartphone, ein Tablet Computer oder dergleichen, in das Virtual Reality Headset einsetzbar. Das mobile Endgerät kann auch in das Virtual Reality Headset festeingebaut sein. Ein Smartphone stellt zugleich einen Empfänger für die Positionsbestimmung und mittels der integrierten Kamera eine Apparatur zur Ausrichtung des Virtual Reality Headsets dar.

Vorteilhafterweise ist wenigstens ein elektrisches Bauteil eines mobilen Endgeräts in das Virtual Reality Headset einsetzbar. Es reicht aus, zum Beispiel nur eine Hauptplatine eines Smartphones einzusetzen. Auf der Hauptplatine können unter anderem ein Hauptprozessor, ein Datenspeicher und ein WLAN-Empfänger angeordnet sein. Für die Erzeugung der virtuellen Realität sind eine Tastatur oder ein Touch Screen Panel eines Smartphones nicht erforderlich. Dadurch wird im Virtual Reality Headset unter anderem weniger Raum beansprucht und Kosten können reduziert werden.

Gemäß einer alternativen Ausführung der Erfindung weist das Virtual Reality Headset wenigstens einen ein Trackingsignal emittierenden oder unter passiver Einwirkung funktionierenden Marker auf, das Fahrgeschäft wenigstens eine Trackingapparatur zur Erfassung einer Bewegung des Markers, wobei anhand der von der Trackingapparatur erfassten Bewegung des Markers die Position und/oder die Ausrichtung des Virtual Reality Headsets relativ zu der Trackingapparatur bestimmt wird. Mittels eines derartigen Motion Capture Systems kann eine Datenverarbeitungsanlage an einem stationären Teil des Fahrgeschäftes oder an Bord eines Fahrzeuges jedem Virtual Reality Headset per Funk, beispielsweise über Bluetooth oder WLAN, übermitteln, in welcher Position und in welcher Ausrichtung es sich gerade befindet.

Vorteilhafterweise ist das Trackingsignal ein optisches, magnetisches, akustisches oder eine Kombination der voranstehend genannten Signale. Damit kann für den jeweiligen Einzelfall ein passendes Trackingsignal gewählt werden.

Mit einem erfindungsgemäßen Fahrgeschäft ist ein Verfahren wie vorangehend beschrieben ausführbar.

Ein erfindungsgemäßes Fahrgeschäft, insbesondere Achterbahn, mit einer Fahrstrecke, wenigstens einem entlang der Fahrstrecke sich bewegenden Fahrzeugs, wenigstens einem Positionsgeber und/oder Ausrichtungsgeber, von dem wenigstens ein Positionssignal bzw. ein zweites Ausrichtungssignal ausgeht, wenigstens einem Virtual Reality Headset, , wobei bei einem Betrieb des Fahrgeschäftes in der wirklichen Realität eine der Fahrt mit dem Fahrzeug entsprechende virtuelle Realität erzeugbar und auf dem Virtual Reality Headset darstellbar ist, zeichnet sich dadurch aus, dass das Virtual Reality Headset ein mobiles Headset ist, das Virtual Reality Headset wenigstens einen Empfänger und/oder wenigstens eine Apparatur aufweist, das Virtual Reality Headset eine lösbare oder drahtlose Kommunikationsschnittstelle aufweist, über die eine Datenverbindung zwischen dem Virtual Reality Headset und einer Datenverarbeitungsvorrichtung des Fahrgeschäfts erfolgt, und dass eine Positionsbestimmung und/oder eine Ausrichtung des Virtual Reality Headsets nach dem erfindungsgemäßen Verfahren zur Positionsbestimmung und/oder zur Bestimmung der Ausrichtung erfolgt.

Die Vorteile dieser Verfahren liegen in der automatischen Positions- und Ausrichtungsbestimmung sowie in der Mobilität des Virtual Reality Headsets.

Die Erfindung wird anhand der nachfolgenden Figuren ausführlich erläutert. Es zeigen:
- Fig. 1: ein Ausführungsbeispiel eines Fahrgeschäftes mit Fahrgästen, die jeweils ein Virtual Reality Headset tragen, dessen Position bestimmt wird,
- Fig. 2: ein Ausführungsbeispiel eines Fahrgeschäftes mit Fahrgästen, die jeweils ein Virtual Reality Headset tragen, dessen Ausrichtung bestimmt wird und
- Fig. 3: eine schematische Darstellung eines Ausführungsbeispiels des Verfahrens zur Ausrichtung des Virtual Reality Headsets.

In den Figuren bezeichnen gleiche Bezugszeichen gleiche Bezugsteile mit jeweils der gleichen Bedeutung. Übersichtshalber werden in den jeweiligen Figuren nur die jeweils relevanten Bezugsteile gekennzeichnet.

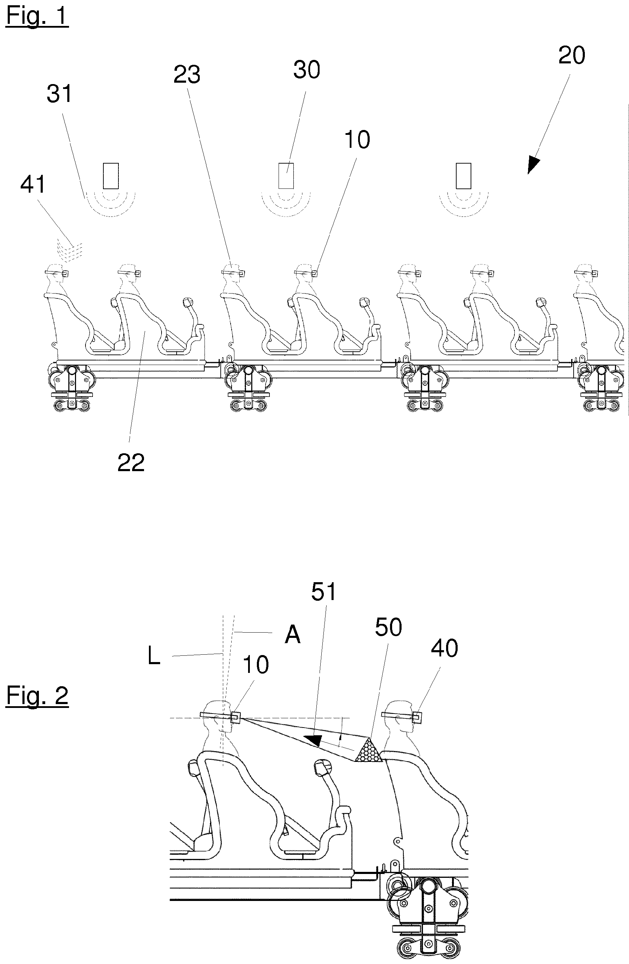

Die Figur 1 zeigt in Seitenansicht einen Ausschnitt eines Zuges einer Achterbahn als Fahrgeschäft 20. Jedes Fahrzeug 22, d. h. jeder Wagon des Zuges, weist zwei Sitzreihen auf, in denen jeweils wenigstens ein Fahrgast 23 sitzt. Während der Fahrt des Zuges trägt jeder Fahrgast 23 ein Virtual Reality Headset 10 in Form einer Virtual Reality Brille. Die Erfindung beschränkt sich aber nicht auf Achterbahnen. Als Fahrgeschäft 20 kann auch ein Karussell oder eine sonstige Vergnügungsattraktion in einem Vergnügungspark oder auf einem Volksfest vorgesehen sein.

In Abhängigkeit von der Position des Fahrgastes 23 in der Sitzreihe des Zuges, der Ausrichtung des Virtual Reality Headsets 10 und der Position des Fahrzeuges 23 auf einer Fahrstrecke wird mittels eines fahrgeschäftsspezifischen Computerprogramms oder einer mobilen App eine einer Fahrt mit dem Fahrzeug 22 entsprechende virtuelle Realität mit dem Virtual Reality Headset 10 erzeugt. Die virtuelle Realität kann derart erzeugt werden, dass die Fahrt durch die virtuelle Realität der Fahrt durch die wirkliche Realität entspricht und dass ein Fahrerlebnis in der wirklichen Realität einem Fahrerlebnis in der virtuellen Realität entspricht. Fährt der Fahrgast 23 in der wirklichen Realität beispielsweise durch einen Looping, dann fährt er in der virtuellen Realität durch den gleichen Looping.

An dem Fahrgeschäft 20 sind Positionsgeber30 installiert, die ein Positionssignal 31 erzeugen. Die Positionsgeber 30 können beispielsweise Bluetooth-Beacons sein, die als Positionssignale 31 Bluetooth Signale abstrahlen. Die Positionsgeber 30 können an einem stationären Teil des Fahrgeschäfts 20, beispielsweise in einem Bahnhof einer Achterbahn, oder in dem Fahrzeug 22 installiert sein. Das Positionssignal 31 wird von einem Empfänger 40, der in dem Virtual Reality Headset 10 eingebaut ist, siehe auch Figur 2, als Empfangssignal 41 detektiert. Beispielsweise kann das Positionssignal 31 ein optisches Lichtsignal sein, vorzugsweise im infraroten Wellenlängenbereich. Infrarotsignale sind für den Fahrgast 23 nicht sichtbar und werden damit auch nicht als störend empfunden. Anhand der vom Empfänger 40 registrierten Helligkeit des Empfangssignals 41 kann ein Abstand des Empfängers 40 zum jeweiligen Positionsgeber 30 bestimmt werden und damit die Position des Virtual Reality Headsets 10 bezüglich der Sitzreihe des Fahrzeuges 22.

Die genaue Position des Virtual Reality Headsets 10 in dem Fahrzeug 22 ist wichtig für die Synchronisation der virtuellen Realität mit der wirklichen Realität. Beispielsweise wird ein Fahrgast 23, der in Bezug auf eine Fahrtrichtung in einer vorderen Sitzreihe des Fahrgeschäfts 20 Platz genommen hat, die wirkliche Realität räumlich und zeitlich anders wahrnehmen als ein Fahrgast 23, der in Bezug auf die Fahrtrichtung des Fahrgeschäfts 20 in einer hinteren Sitzreihe des Fahrgeschäftes 20 Platz genommen hat. Diese unterschiedlichen Eindrücke auf Grund der Sitzplatzanordnung in dem Fahrgeschäft 20 müssen für eine passende Wahrnehmung der virtuellen Realität korrekt in die virtuelle Realität übertragen werden. Hierzu ist die genaue Position des Virtual Reality Headsets 10 in dem Fahrgeschäft 20 erforderlich. Durch die genaue Positionsbestimmung des Virtual Reality Headsets 10 kann damit die Position des Fahrgastes 23 in der virtuellen Realität mit der Position des Fahrgastes 23 in der wirklichen Realität synchronisiert werden.

Für eine korrekte Synchronisation der virtuellen Realität mit der wirklichen Realität reicht es aber nicht aus, lediglich die Position des Fahrgastes 23 in der wirklichen Realität mit der Position des Fahrgastes 23 in der virtuellen Realität in Übereinstimmung zu bringen. Zusätzlich muss auch die Ausrichtung des Fahrgastes 23 in der virtuellen Realität mit der Ausrichtung des Fahrgastes 23 in der wirklichen Realität übereinstimmen. Beispielsweise sollte eine Vorwärtsbewegung in der wirklichen Realität nicht zu einer Seitwärtsbewegung in der virtuellen Realität führen. Damit eine Vorwärtsbewegung in der wirklichen Realität auch zu einer Vorwärtsbewegung in der virtuellen Realität führt, muss die Ausrichtung des Virtual Reality Headsets 10 in der virtuellen Realität mit der Ausrichtung des Virtual Reality Headsets 10 in der wirklichen Realität übereinstimmen. Gleichwohl kann mittels der erfolgten Ausrichtung des Virtual Reality Headsets 10 die Wahrnehmung der virtuellen Realität aber auch gezielt geändert werden.

Die Bestimmung der Ausrichtung des Virtual Reality Headsets 10 ist in der Figur 2 dargestellt. Bezogen auf die Fahrtrichtung ist an der Rückseite eines Fahrzeuges 22 ein Ausrichtungsgeber 50 angeordnet. Diesen Ausrichtungsgeber 50 erkennt der Fahrgast 23, der in einem Fahrzeug hinter dem Fahrzeug 22 mit dem Ausrichtungsgeber 50 sitzt, in seinem vorderen Gesichtsfeld, selbst dann, wenn der Fahrgast nicht genau in Geradeausrichtung blickt. Der Ausrichtungsgeber 50 kann z. B. ein Quick-Response-Code oder ein Strichcode sein. Ein Ausrichtungssignal 51 bilden dabei Reflektionen des Quick-Response-Codes oder des Strichcodes. Das Ausrichtungssignal 51 kann mittels einer Apparatur 60, beispielsweise einer Kamera, die in dem Virtual Reality Headset 10 integriert ist, wahrgenommen werden.

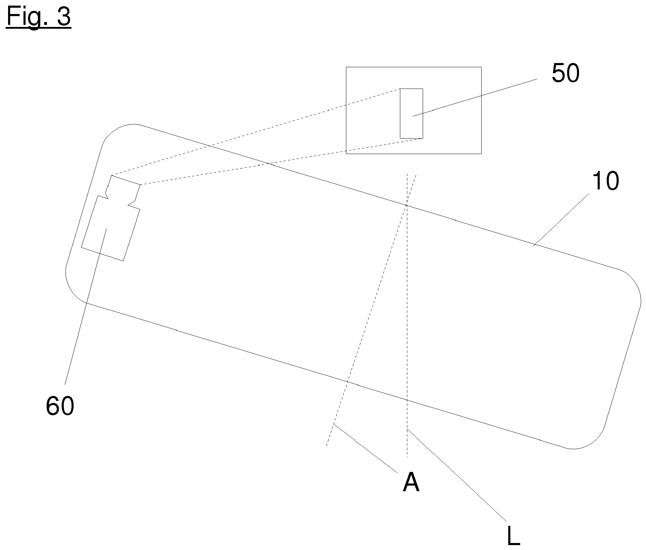

Die Figur 3 zeigt, wie anhand eines Vergleichs der tatsächlichen Ausrichtung des Ausrichtungsgebers 50 zu der mittels der Apparatur 60 in dem Virtual Reality Headset 10 wahrgenommenen Ausrichtung des Ausrichtungsgebers 50, die beispielsweise durch eine Neigung des Fahrgastes 22 zu der Seite hin von der tatsächlichen Ausrichtung abweichen kann, die Lage einer Hochachse A relativ zu einer Lotrichtung L bestimmt werden kann. Durch die Kenntnis der Lage der Hochachse A des Virtual Reality Headsets 10 in dem mit dem Fahrgast festverbundenen Koordinatensystems und der Lotrichtung L kann die Ausrichtung der virtuellen Realität relativ zu der wirklichen Realität bestimmt werden. Vorteilhafterweise ist jedem Fahrzeug 22 ein eigener Quick-Response-Code oder Strichcode zugeordnet. Damit kann nicht nur die Ausrichtung des Virtual Reality Headsets 10, sondern zugleich auch die Position des Virtual Reality Headsets 10 bestimmt werden.

Die Kamera 60 kann beispielsweise über ein in das Virtual Reality Headset 10 eingebautes Smartphone realisiert werden.

Eine weitere Lösung zur Bestimmung der Position des Virtual Reality Headsets und dessen Ausrichtung bietet der Einsatz von sogenannten Motion Capture Systemen. Hierbei wird das Virtual Reality Headset 10 mit entweder passiven, zum Beispiel optischen oder magnetischen oder aktiven, im Sinne von selbstleuchtenden Markern, ausgestattet, die von einer Apparatur, die Bewegungen erfassen kann, das heißt einem Motion Capture System, erfasst werden. Anhand dieser Daten kann eine Datenverarbeitungsanlage im Bahnhof oder an Bord des Fahrgeschäftes 20 jedem Virtual Reality Headset 10 per Funk, beispielsweise über Bluetooth oder WLAN, übermitteln, an welcher Position und in welcher Ausrichtung es sich gerade befindet.

### Bezugszeichenliste

- 10: Virtual Reality Headset

- 20: Fahrgeschäft
- 22: Fahrzeug
- 23: Fahrgast

- 30: Positionsgeber
- 31: Positionssignal

- 40: Empfänger
- 41: Empfangssignal

- 50: Ausrichtungsgeber
- 51: Ausrichtungssignal

- 60: Apparatur

- A: Hochachse
- L: Lotrichtung

## Patentansprüche

1. Verfahren zur Positionsbestimmung wenigstens eines Virtual Reality Headsets (10) in wenigstens einem entlang einer Fahrstrecke eines Fahrgeschäftes (20) sich bewegenden Fahrzeug (22),
- das wenigstens einen Fahrgast (23) aufnimmt, dem das Virtual Reality Headset (10) während einer Fahrt mit dem Fahrzeug (22) aufgesetzt ist,
- wobei bei einem Betrieb des Fahrgeschäftes (20) in einer wirklichen Realität eine der Fahrt mit dem Fahrzeug (22) entsprechende virtuelle Realität erzeugt und auf dem Virtual Reality Headset (10) dargestellt wird,
- das Fahrgeschäft (20) wenigstens einen Positionsgeber (30) aufweist, von dem wenigstens ein Positionssignal (31) ausgeht,
- das Virtual Reality Headset (10) ein mobiles Virtual Reality Headset (10) ist,
- das Virtual Reality Headset (10) eine lösbare und/oder eine drahtlose Kommunikationsschnittstelle aufweist, über die eine Datenverbindung zwischen dem Virtual Reality Headset (10) und einer Datenverarbeitungsvorrichtung des Fahrgeschäftes erfolgt, **dadurch gekennzeichnet, dass**
- das Virtual Reality Headset (10) wenigstens einen Empfänger (40) aufweist, der das Positionssignal (31) des Positionsgebers (30) zur Positionsbestimmung des Virtual Reality Headsets (10) in dem Fahrzeug (22) relativ zu dem Positionsgeber (30) auswertet.

2. Verfahren zur Ausrichtung wenigstens eines Virtual Reality Headsets (10) in wenigstens einem entlang einer Fahrstrecke eines Fahrgeschäftes (20) sich bewegenden Fahrzeug (22),
- das wenigstens einen Fahrgast (23) aufnimmt, dem das Virtual Reality Headset (10) während einer Fahrt mit dem Fahrzeug (22) aufgesetzt ist,
- wobei bei einem Betrieb des Fahrgeschäftes (20) in einer wirklichen Realität eine der Fahrt mit dem Fahrzeug (22) entsprechende virtuelle Realität erzeugt und auf dem Virtual Reality Headset (10) dargestellt wird,
- das Fahrgeschäft (20) wenigstens einen Ausrichtungsgeber (50) aufweist, von dem wenigstens ein Ausrichtungssignal (51) ausgeht,
- das Virtual Reality Headset (10) ein mobiles Virtual Reality Headset (10) ist,
- das Virtual Reality Headset (10) eine lösbare und/oder eine drahtlose Kommunikationsschnittstelle aufweist, über die eine Datenverbindung zwischen dem Virtual Reality Headset (10) und einer Datenverarbeitungsvorrichtung (24) des Fahrgeschäftes (20) erfolgt, **dadurch gekennzeichnet, dass**
- das Virtual Reality Headset (10) wenigstens eine Apparatur (60) aufweist, die das Ausrichtungssignal (51) des Ausrichtungsgebers (50) zur Ausrichtungsbestimmung des Virtual Reality Headsets (10) in der virtuellen Realität relativ zu dem Ausrichtungsgeber (50) auswertet.

3. Verfahren nach Anspruch 1 und Anspruch 2.

4. Verfahren nach Anspruch 3, **dadurch gekennzeichnet, dass** ein Geber der Positionsgeber (30) und zugleich der Ausrichtungsgeber (50) ist.

5. Verfahren nach Anspruch 1, 3, oder 4,
**dadurch gekennzeichnet, dass** das Fahrgeschäft (20) wenigstens drei, vorzugsweise wenigstens acht, Positionsgeber (30) aufweist.

6. Verfahren nach einem der Ansprüche 1, 3, 4 oder 5,
**dadurch gekennzeichnet, dass** die Positionssignale (31) Bluetooth, WLAN, optische, vozugsweise infrarote, Quick-Response-Codes, oder Strichcodes, magnetische, eine Kombination der voranstehend genannten Signale oder sonstige Funksignale sind.

7. Verfahren nach einem der Ansprüche 2 oder 3,
**dadurch gekennzeichnet, dass** die Ausrichtungssignale (51) optische, vozugsweise infrarote, Quick-Response-Codes oder Strichcodes, sind.

8. Verfahren nach einem der vorangehenden Ansprüche,
**dadurch gekennzeichnet, dass** der Positionsgeber (30) und/oder der Ausrichtungsgeber (50) an einer stationären Stelle des Fahrgeschäftes (20) und/oder an dem Fahrzeug (22) angeordnet ist.

9. Verfahren nach einem der vorangehenden Ansprüche,
**dadurch gekennzeichnet, dass** wenigstens eine Kamera in dem Virtual Reality Headset (10) integriert ist.

10. Verfahren nach einem der vorangehenden Ansprüche,
**dadurch gekennzeichnet, dass** ein mobiles Endgerät, vorzugsweise ein Mobilfunkgerät oder ein Mobiltelefon, insbesondere ein Smartphone, ein Tabletcomputer oder dergleichen, in das Virtual Reality Headset (10) einsetzbar ist.

11. Verfahren nach Anspruch 11,
**dadurch gekennzeichnet, dass** wenigstens ein elektrisches Bauteil eines mobilen Endgeräts in das Virtual Reality Headset (10) einsetzbar ist.

12. Verfahren nach einem der vorangehenden Ansprüche,
**dadurch gekennzeichnet, dass**
- das Virtual Reality Headset (10) wenigstens einen ein Trackingsignal emittierenden oder unter passiver Einwirkung funktionierenden Marker aufweist,
- das Fahrgeschäft (20) wenigstens eine Trackingapparatur zur Erfassung einer Bewegung des Markers aufweist,
- wobei anhand der von der Trackingapparatur erfassten Bewegung des Markers die Position und/oder die Ausrichtung des Virtual Reality Headsets (10) relativ zu der Trackingapparatur bestimmt wird.

13. Verfahren nach Anspruch 12,
**dadurch gekennzeichnet, dass** das Trackingsignal ein optisches, magnetisches, akkustisches oder eine Kombination der voranstehend genannten Signale ist.

14. Fahrgeschäft (20), insbesondere Achterbahn, mit
- einer Fahrstrecke,
- wenigstens einem entlang der Fahrstrecke sich bewegenden Fahrzeug (22),
- wenigstens einen Positionsgeber (30) und/oder Ausrichtungsgeber (50), von dem wenigstens ein Positionssignal (31) bzw. ein Ausrichtungssignal (51) ausgeht,
- wenigstens einem Virtual Reality Headset (10),
- wobei bei einem Betrieb des Fahrgeschäftes (20) in der wirklichen Realität eine der Fahrt mit dem Fahrzeug (22) entsprechende virtuelle Realität erzeugbar und auf dem Virtual Reality Headset (10) darstellbar ist,
- das Virtual Reality Headset (10) ein mobiles Virtual Reality Headset (10) ist,
- das Virtual Reality Headset (10) eine lösbare oder drahtlose Kommunikationsschnittstelle aufweist, über die eine Datenverbindung zwischen dem Virtual Reality Headset (10) und einer Datenverarbeitungsvorrichtung (24) des Fahrgeschäftes (20) erfolgt, **dadurch gekennzeichnet, dass**
- das Virtual Reality Headset (10) wenigstens einen Empfänger (40), der das Positionssignal (31) des Positionsgebers (30) zur Positionsbestimmung des Virtual Reality Headsets (10) in dem Fahrzeug (22) relativ zu dem Positionsgeber (30) auswertet und/oder wenigstens eine Apparatur (60) aufweist, die das Ausrichtungssignal (51) des Ausrichtungsgebers (50) zur Ausrichtungsbestimmung des Virtual Reality Headsets (10) in der virtuellen Realität relativ zu dem Ausrichtungsgeber (50) auswertet.

## Claims

1. Method for determining a position of at least one virtual reality headset (10) in a vehicle (22) moving along a travel section of a fairground ride (20),
- which vehicle receives at least one passenger (23) on whom the virtual reality headset (10) is placed during a ride with the vehicle (22),
- wherein, during an operation of the fairground ride (20) in an actual reality, a virtual reality corresponding to the ride with the vehicle (22) is generated and is represented on the virtual reality headset (10),
- the fairground ride (20) has at least one position sensor (30) from which at least one position signal (31) emanates,
- the virtual reality headset (10) is a mobile virtual reality headset (10),
- the virtual reality headset (10) has a detachable and/or a wireless communication interface, via which a data connection takes place between the virtual reality headset (10) and a data processing device of the fairground ride (20),
**characterised in that**
- wherein the virtual reality headset (10) has at least one receiver (40) which evaluates the position signal (31) of the position sensor (30) for determining the position of the virtual reality headset (10) in the vehicle (22) relative to the position sensor (30).

2. Method for an alignment of at least one virtual reality headset (10) in a vehicle (22) moving along a travel section of a fairground ride (20),
- which vehicle receives at least one passenger (23) on whom the virtual reality headset (10) is placed during a ride with the vehicle (22),
- wherein, during an operation of the fairground ride (20) in an actual reality, a virtual reality corresponding to the ride with the vehicle (22) is generated and is represented on the virtual reality headset (10),
- the fairground ride (20) has at least one alignment sensor (50) from which an alignment signal (51) emanates,
- the virtual reality headset (10) is a mobile virtual reality headset (10),
- and the virtual reality headset (10) comprises a detachable and/or a wireless communication interface, via which a data connection takes place between the virtual reality headset (10) and a data processing device (24) of the fairground ride (20),
**characterised in that**
- the virtual reality headset (10) has an apparatus (60) which evaluates the alignment signal (51) of the alignment sensor (50) for determining the alignment of the virtual reality headset (10) in the virtual reality relative to the alignment sensor (50).

3. Method according to claim 1 and claim 2.

4. Method according to claim 3, **characterised in that** a sensor is a position sensor (30) and simultaneously an alignment sensor (50).

5. Method according to claim 1, 3 or 4, **characterised in that** the fairground ride (20) has at least three, preferably at last eight, position sensors (30).

6. Method according to one of claims 1, 3, 4 or 5, **characterised in that** the position signals (31) are Bluetooth, WLAN, optical, preferably infrared signals, quick-response codes or barcodes, magnetic signals, a combination of the aforementioned signals or other radio signals.

7. Method according to one of claims 2 or 3, **characterised in that** the alignment signals (51) are optical, preferably infrared, quick-response codes or barcodes.

8. Method according to one of the preceding claims, **characterised in that** the position sensor (30) and/or the alignment sensor (50) is arranged at a stationary point of the fairground ride (20) and/or on the vehicle (22).

9. Method according to one of the preceding claims, **characterised in that** at least one camera is integrated in the virtual reality headset (10).

10. Method according to one of the preceding claims, **characterised in that** a mobile terminal, preferably a mobile radio device or a mobile telephone, in particular a smartphone, a tablet computer or the like. can be inserted into the virtual reality headset (10).

11. Method according to claim 11, **characterised in that** at least one electrical component of a mobile terminal can be inserted into the virtual reality headset (10).

12. Method according to one of the preceding claims, **characterised in that**
- the virtual reality headset (10) has at least one marker which emits a tracking signal or functions under passive action,
- the fairground ride (20) has a tracking apparatus for detecting a movement of the marker,
wherein the position and/or the alignment of the virtual reality headset (10) relative to the tracking apparatus is determined using the movement of the marker detected by the tracking apparatus.

13. Method according to claim 12, **characterised in that** the tracking signal is an optical, magnetic or acoustic signal, or a combination of the aforementioned signals.

14. Fairground ride (20), in particular a rollercoaster, comprising
- a travel section,
- at least one vehicle (22) which moves along the travel section,
- at least one position sensor (30) and/or alignment sensor, from which at least one position signal (31) or an alignment signal (51) emanates,
- at least one virtual reality headset (10),
- wherein, during an operation of the fairground ride (20) in the actual reality, a virtual reality corresponding to the ride with the vehicle (22) can be generated and can be represented on the virtual reality headset (10),
- the virtual reality headset (10) is a mobile virtual reality headset (10),
- the virtual reality headset (10) comprises a detachable or wireless communication interface, via which a data connection takes place between the virtual reality headset (10) and a data processing device (24) of the fairground ride (20),
**characterised in that**
- the virtual reality headset (10) has at least one receiver (40) which evaluates the position signal (31) of the position sensor (30) for determining the position of the virtual reality headset (10) in the vehicle (22) relative to the position sensor (30), and/or has at least one apparatus (60) which evaluates the alignment signal (51) of the alignment sensor (50) for determining the alignment of the virtual reality headset (10) in the virtual reality relative to the alignment sensor (50).

## Revendications

1. Procédé permettant de déterminer la position d'au moins un casque de réalité virtuelle (10) dans au moins un véhicule (22) se déplaçant le long d'une piste d'une attraction foraine (20),
- qui accueille au moins un passager (23) auquel on fait porter le casque de réalité virtuelle (10) au cours d'un déplacement,
- lors du fonctionnement de l'attraction foraine (20) dans une réalité réelle, on crée une réalité virtuelle correspondante, et on la représente sur le casque de réalité virtuelle (10),
- l'attraction foraine (20) comporte au moins un émetteur de position (30) qui délivre au moins un signal de position (31),
- le casque de réalité virtuelle (10) est un casque de réalité virtuelle mobile (10),
- le casque de réalité virtuelle (10) comporte une interface de communication amovible et/ou sans fil par l'intermédiaire de laquelle on effectue une liaison de données entre le casque de réalité virtuelle (10) et un dispositif de traitement de données de l'attraction foraine,
**caractérisé en ce que**
- le casque de réalité virtuelle (10) comporte au moins un récepteur (40) qui évalue le signal de position (31) de l'émetteur de position (30) pour déterminer la position du casque de réalité virtuelle (10) dans le véhicule (22) par rapport à l'émetteur de position (30).

2. Procédé permettant d'orienter au moins un casque de réalité virtuelle (10) dans au moins un véhicule (22) se déplaçant le long d'une piste d'une attraction foraine (20),
- qui accueille au moins un passage (23) auquel on fait porter le casque de réalité virtuelle (10) pendant un déplacement avec le véhicule (22),
- lors du fonctionnement de l'attraction foraine (20) dans une réalité réelle, une réalité virtuelle correspondant au déplacement avec le véhicule (22) est créée, et est représentée sur le casque de réalité virtuelle (10),
- l'attraction foraine (20) comporte au moins un émetteur d'orientation (50) qui délivre au moins un signal d'orientation (51),
- le casque de réalité virtuelle (10) est un casque de réalité virtuelle mobile (10),
- le casque de réalité virtuelle (10) comporte une interface de communication amovible et/ou sans fil, par l'intermédiaire de laquelle on effectue une liaison de données entre le casque de réalité virtuelle (10) et un dispositif de traitement de données (24) de l'attraction foraine (20),
**caractérisé en ce que**
- le casque de réalité virtuelle (10) comporte au moins un appareillage (60) qui évalue le signal d'orientation (51) de l'émetteur d'orientation (50) pour déterminer l'orientation du casque de réalité virtuelle (10) dans la réalité virtuelle par rapport à l'émetteur d'orientation (50).

3. Procédé conforme à la revendication 1 et à la revendication 2.

4. Procédé conforme à la revendication 3,
**caractérisé en ce qu'**
un émetteur est l'émetteur de position (30) et simultanément l'émetteur d'orientation (50).

5. Procédé conforme à la revendication 1, 3 ou 4,
**caractérisé en ce que**
l'attraction foraine (20) comporte au moins trois, de préférence au moins huit émetteurs de position (30).

6. Procédé conforme à l'une des revendications 1, 3, 4 ou 5,
**caractérisé en ce que**
les signaux de position (31) sont des signaux Bluetooth, des signaux WLAN, des signaux optiques, de préférence des signaux infrarouges, des codes Quick-Response ou des codes-barres, des signaux magnétiques, une combinaison de ces signaux ou d'autres signaux radio.

7. Procédé conforme à l'une des revendications 2 et 3,
**caractérisé en ce que**
les signaux d'orientation (51) sont des signaux optiques, de préférence des signaux infrarouges, des codes Quick-Response ou des codes-barres.

8. Procédé conforme à l'une des revendications précédentes,
**caractérisé en ce que**
l'émetteur de position (30) et/ou l'émetteur d'orientation (50) est(sont) installé(s) à un emplacement stationnaire de l'attraction foraine (20) et/ou sur le véhicule (22).

9. Procédé conforme à l'une des revendications précédentes,
**caractérisé en ce qu'**
au moins une caméra est intégrée dans le casque de réalité virtuelle (10).

10. Procédé conforme à l'une des revendications précédentes,
**caractérisé en ce qu'**
un terminal mobile, de préférence un appareil radio mobile ou un téléphone mobile, en particulier un Smartphone, une tablette d'ordinateur ou similaire peut être inséré dans le casque de réalité virtuelle (10).

11. Procédé conforme à la revendication 11,
**caractérisé en ce qu'**
au moins un composant électrique d'un terminal mobile peut être inséré dans le casque de réalité virtuelle (10).

12. Procédé conforme à l'une des revendications précédentes, **caractérisé en ce que**
- le casque de réalité virtuelle (10) comporte au moins un marqueur émettant un signal de suivi ou fonctionnant sous action passive,
- l'attraction foraine (20) comporte au moins un appareillage de suivi pour permettre de détecter le déplacement du marqueur,
- la position et/ou l'orientation du casque de réalité virtuelle (10) par rapport à l'appareillage de suivi étant déterminée(s) sur le fondement du déplacement du marqueur détecté par l'appareillage de suivi.

13. Procédé conforme à la revendication 12,
**caractérisé en ce que**
le signal de suivi est un signal optique, un signal magnétique, un signal acoustique ou une combinaison de tels signaux.

14. Attraction foraine (20), en particulier montagnes russes comprenant :
- une piste de déplacement,
- au moins un véhicule (22) se déplaçant le long de cette piste,
- au moins un émetteur de position (30) et/ou un émetteur d'orientation (50) délivrant au moins un signal de position (31) ou un signal d'orientation (51),
- au moins un casque de réalité virtuelle (10),
- lors du fonctionnement de l'attraction foraine (20) dans la réalité réelle, une réalité virtuelle correspondant au déplacement avec le véhicule (22) pouvant être créée et être représentée sur le casque de réalité virtuelle (10),
- le casque de réalité virtuelle (10) est un casque de réalité virtuelle mobile (10),
- le casque de réalité virtuelle (10) comporte une interface de communication amovible ou sans fil par l'intermédiaire de laquelle une liaison de données entre le casque de réalité virtuelle (10) et un dispositif de traitement de données (24) du véhicule (20) est effectuée,
**caractérisée en ce que**
- le casque de réalité virtuelle (10) comporte au moins un récepteur (40) qui évalue le signal de position (31) du capteur de position (30) pour permettre de déterminer la position du casque de réalité virtuelle (10) dans le véhicule (22) relativement à l'émetteur de position (30) et/ou au moins un appareillage (60) qui évalue le signal d'orientation (51) du capteur d'orientation (50) pour déterminer l'orientation du casque de réalité virtuelle (10) dans la réalité virtuelle par rapport au capteur d'orientation (50).
